# FASCICULE DE BREVET EUROPEEN

(11) **EP 3 246 576 B1**
(45) Date de publication et mention de la délivrance du brevet: **18.03.2020**
(21) Numéro de dépôt: 17171610.3
(22) Date de dépôt: 17.05.2017
(51) Int. Cl.: F04D 27/00, F04D 25/06, F04D 25/02, F04D 25/04, F03D 3/06, F23L 17/00, F24F 3/16, F03D 9/28

(54) **EXTRACTEUR DE GAZ COMPRENANT UNE ÉOLIENNE, UN VENTILATEUR, UN MOTEUR ET UN DISPOSITIF D'ACCOUPLEMENT**
GASEXTRAKTOR, DER EINE WINDKRAFTANLAGE, EINEN VENTILATOR, EINEN MOTOR UND EINE KUPPLUNGSVORRICHTUNG UMFASST
GAS EXTRACTOR COMPRISING A WIND TURBINE, A FAN, A MOTOR AND A COUPLING DEVICE

(30) Priorité: 18.05.2016 FR 1654421
(43) Date de publication de la demande: 22.11.2017
(73) Titulaire: VTI, 34110 Frontignan (FR); Centre National de la Recherche Scientifique (C.N.R.S.), 75794 Paris Cedex 16 (FR)
(72) Inventeur: SANCHEZ, Marc, 34110 FRONTIGNAN (FR); TOUTANT, Adrien, 66680 CANOHES (FR); DAUMAS-BATAILLE, Françoise, 66680 CANOHES (FR); BOUIS, Florian, 34140 MEZE (FR); MONDINA, Sylvain, 34830 JACOU (FR); FRAISSE, Jean-Michel, 34540 BALARUC LE VIEUX (FR)
(74) Mandataire: Cabinet BARRE LAFORGUE & associés

(56) Documents cités:
- CN-A- 102 691 625
- CN-A- 105 351 220
- DE-U1-202004 016 620
- JP-U- S5 690 482

## Description

L'invention concerne un extracteur de gaz, notamment d'air vicié, comprenant une éolienne, un ventilateur, un moteur et deux dispositifs d'accouplement.

Un extracteur de gaz est un dispositif comprenant un ventilateur destiné à être installé en sortie d'un conduit d'évacuation d'air de façon à permettre l'extraction des gaz évacués par ce conduit (gaz brûlés d'une chaudière à gaz, à fioul ou encore à bois, fumées produites par une cheminée à bois...) et/ou la ventilation des locaux reliés à ce conduit (notamment les pièces d'habitation telles que les pièces humides : cuisines, salles de bains). L'air vicié évacué permet un renouvellement de l'air situé dans les locaux grâce à des entrées d'air frais extérieur dans les pièces principales ou pièces sèches (par exemple salon, salle à manger, chambres).

Un extracteur de gaz doit donc présenter une efficacité de ventilation suffisante pour assurer un renouvellement minimum de l'air pour le confort et la sécurité des habitants des locaux. D'autre part, une ventilation excessive des pièces entrainerait une augmentation injustifiée de la consommation énergétique de locaux chauffés liée au chauffage de l'air frais entrant, sans compter la consommation d'énergie supplémentaire liée au fonctionnement du moteur.

Un extracteur de gaz comprend un ventilateur disposé en sortie d'un conduit d'évacuation d'air, de façon à ce que le ventilateur se trouve dans le flux d'air vicié évacué. Le mouvement de rotation des pales du ventilateur est notamment généré par le tirage thermique. Toutefois, ce phénomène naturel n'est pas nécessairement suffisant pour permettre une extraction suffisante et/ou constante dans le temps.

Il a donc été proposé des extracteurs de gaz comprenant un ventilateur et un moteur d'entraînement en rotation dudit ventilateur permettant d'augmenter la vitesse de rotation du ventilateur et ainsi le rendement d'extraction de l'air.

On connait également des extracteurs de gaz comprenant une éolienne permettant d'augmenter le rendement d'extraction du ventilateur en augmentant sa vitesse de rotation sans nécessiter un moteur tel qu'un moteur électrique par exemple. Cependant, le vent étant une source d'énergie naturelle variable, de tels extracteurs ne permettent pas d'assurer une efficacité d'extraction constante, ni d'optimiser la gestion de l'énergie apportée par le vent.

DE 20 2004 016620 décrit un extracteur de gaz utilisant l'énergie solaire ou éolienne. Il comprend une éolienne reliée par une roue libre à un arbre d'entraînement ainsi qu'à un moteur et à un ventilateur, le moteur étant disposé entre l'éolienne et le ventilateur.

CN 102 691 625 décrit un dispositif comprenant une éolienne permettant de générer du courant ou procurer une ventilation, le dispositif comprend également un moteur et un ventilateur.

CN 105 351 220 décrit un dispositif de conditionnement d'air comprenant un ventilateur, une éolienne à axe vertical ainsi qu'un moteur permettant d'entraîner en rotation le ventilateur.

US 6 302 778 décrit un extracteur d'air pour toiture comprenant un ventilateur, un moteur et une éolienne.

Il a été proposé par le document US 1,965,171 un extracteur de gaz comprenant un ventilateur, une éolienne et un moteur adapté pour pouvoir être couplé à l'ensemble formé par le ventilateur et l'éolienne. Lorsque le moteur de l'extracteur de gaz de US 1,965,171 est à l'arrêt, le moteur n'entrave pas la rotation de l'ensemble formé par le ventilateur et l'éolienne.

Un extracteur de gaz selon US 1,965,171 permet donc d'augmenter la vitesse de rotation du ventilateur lorsque la vitesse du vent n'est pas suffisante pour assurer une extraction suffisante.

Toutefois, de tels dispositifs ne permettent pas d'optimiser la gestion de l'énergie apportée par le vent, ni de faire face à toutes les situations de vent possibles.

L'invention vise donc à proposer un extracteur de gaz permettant d'améliorer la fiabilité et la régularité de l'extraction des gaz tout en utilisant au mieux l'énergie provenant d'une éolienne.

L'invention vise en outre à proposer un extracteur de gaz qui permette de limiter la consommation énergétique liée au fonctionnement de l'extracteur de gaz.

L'invention vise également à proposer un extracteur de gaz permettant de pallier les situations dans lesquelles le vent est trop fort ou trop faible sans entraîner une augmentation inutile de l'extraction de gaz ni une diminution trop importante de l'extraction de gaz.

Elle vise également à proposer un tel extracteur de gaz qui soit simple, peu coûteux à réaliser et facile à installer.

L'invention vise en outre à proposer un tel extracteur de gaz qui soit robuste, résistant aux polluants gras ou chimiques et fiable dans le temps.

Pour ce faire, l'invention concerne un extracteur de gaz selon la revendication 1.

Les inventeurs ont constaté que le fait de disposer un premier dispositif d'accouplement entre ladite éolienne et ledit groupe moto-ventilateur d'un extracteur de gaz permet d'optimiser la gestion de l'énergie consommée par le moteur et fournie par l'éolienne en permettant d'interrompre le couplage entre l'éolienne et le groupe moto-ventilateur lorsque cela est souhaitable. La possibilité de pouvoir modifier l'état de couplage/découplage entre l'éolienne et le groupe moto-ventilateur permet d'optimiser la gestion de l'énergie fournie par l'éolienne et utilisée par le moteur en permettant par exemple de désaccoupler l'éolienne du groupe moto-ventilateur lorsqu'il n'y pas de vent ou pas suffisamment de vent pour permettre d'entraîner en rotation le ventilateur d'extraction par l'éolienne, le moteur pouvant alors permettre la rotation du ventilateur d'extraction, ou encore lorsque le vent est trop fort et entraînerait une extraction de gaz trop importante.

Tout dispositif d'accouplement peut être utilisé. Il peut par exemple s'agir d'un embrayage ou encore d'un dispositif de transmission rotative unidirectionnelle ou « roue libre ».

Dans une première variante de réalisation d'un extracteur de gaz selon l'invention, ledit premier dispositif d'accouplement est un dispositif de transmission rotative unidirectionnelle. Le dispositif de transmission rotative unidirectionnelle est tel qu'il permet d'éviter au groupe moto-ventilateur d'entraîner l'éolienne en rotation en particulier lorsqu'il n'y a pas de vent et que seul le moteur permet de faire fonctionner le ventilateur (en complément avec le tirage thermique). Ainsi, à l'état de couplage, la roue libre permet à l'éolienne d'entraîner le ventilateur d'extraction (et le moteur) en rotation alors qu'à l'état de découplage, ledit groupe moto-ventilateur n'entraîne pas l'éolienne en rotation, en particulier lorsque la vitesse de rotation du groupe moto-ventilateur est supérieure à la vitesse de rotation de l'éolienne, à la manière d'une roue libre sur une bicyclette. Ceci permet ainsi de limiter la consommation d'énergie par le moteur en supprimant les frottements qui seraient liés à la mise en mouvement de l'éolienne alors qu'il n'y a pas de vent.

Dans une deuxième variante de réalisation d'un extracteur de gaz selon l'invention, ledit premier dispositif d'accouplement est un embrayage, en particulier un embrayage commandé. Ainsi, à l'état de couplage, l'embrayage permet à l'éolienne d'entraîner le ventilateur d'extraction (et le moteur) en rotation alors qu'à l'état de découplage, c'est-à-dire à l'état débrayé dans ce cas, ledit groupe moto-ventilateur n'entraîne pas l'éolienne en rotation, l'éolienne étant mécaniquement désolidarisée du groupe moto-ventilateur de façon à interrompre la liaison entre l'éolienne et le groupe moto-ventilateur. Similairement à la première variante, ceci permet également de limiter la consommation d'énergie par le moteur en supprimant les frottements qui seraient liés à la mise en mouvement de l'éolienne alors qu'il n'y a pas de vent.

Comme le premier dispositif d'accouplement, le deuxième dispositif d'accouplement peut également être un dispositif de transmission rotative unidirectionnelle ou bien un embrayage, en particulier un embrayage commandé.

Selon l'invention, le moteur est interposé entre l'éolienne et le ventilateur d'extraction, le premier dispositif d'accouplement étant toujours interposé entre ladite éolienne et ledit moteur.

Avantageusement et selon l'invention, un dispositif d'accouplement, appelé deuxième dispositif d'accouplement (le premier dispositif d'accouplement étant le dispositif d'accouplement interposé entre ladite éolienne et ledit groupe moto-ventilateur) est interposé entre le ventilateur d'extraction et le moteur de façon à permettre une vitesse de rotation du ventilateur d'extraction supérieure à celle du moteur, en limitant les pertes par frottement de la liaison entre le ventilateur et le moteur. Un tel dispositif d'accouplement permet donc au dispositif selon l'invention de profiter plus efficacement du tirage thermique éventuel en permettant au ventilateur de présenter une vitesse de rotation supérieure à la vitesse de rotation du moteur. Un tel dispositif d'accouplement, tel qu'un dispositif de transmission rotative unidirectionnelle, peut par exemple permettre au moteur d'entrainer en rotation le ventilateur d'extraction, tout en permettant un entraînement du ventilateur d'extraction par l'éolienne uniquement lorsque la vitesse du vent est suffisante pour atteindre la vitesse de consigne. Ceci permet d'optimiser la gestion par l'unité de commande de l'énergie fournie par l'éolienne et transmise au ventilateur d'extraction, c'est-à-dire d'optimiser l'utilisation du moteur en ne déclenchant son démarrage que si nécessaire.

Le deuxième dispositif d'accouplement est adapté pour présenter :
o un premier état, dit état de couplage, dans lequel le moteur est accouplé au ventilateur d'extraction pour pouvoir l'entraîner en rotation (l'éolienne pouvant éventuellement également être accouplée au ventilateur d'extraction),
o un deuxième état, dit état de découplage, dans lequel ledit moteur n'entraîne pas le ventilateur d'extraction en rotation. La présence du deuxième dispositif d'accouplement permet de pouvoir coupler ou découpler le moteur du ventilateur d'extraction en utilisant par exemple un dispositif de transmission rotative unidirectionnelle juxtaposé au moteur. Selon une variante de réalisation d'un extracteur de gaz selon l'invention, le deuxième dispositif d'accouplement est un dispositif de transmission rotative unidirectionnelle.

Selon une variante de réalisation exclue de la portée de l'invention, le moteur est disposé sous le ventilateur d'extraction, et n'est alors pas interposé entre le ventilateur d'extraction et l'éolienne. Dans ce cas, l'éolienne est accouplée au ventilateur d'extraction directement au-dessus de ce dernier, seul le premier dispositif d'accouplement étant interposé entre l'éolienne et le ventilateur d'extraction et le deuxième dispositif d'accouplement étant interposé entre le ventilateur d'extraction et le moteur. Dans un tel mode de réalisation, la présence du deuxième dispositif d'accouplement entre le ventilateur d'extraction et le moteur aurait également pour avantage de protéger le moteur de toute détérioration qui pourrait être causée par un entraînement forcé à une vitesse trop importante, par exemple en cas de vent très important (rafales de vent par exemple).

Avantageusement et selon une variante de réalisation de l'invention, chaque dispositif d'accouplement peut être choisi parmi un dispositif de transmission rotative unidirectionnelle et un embrayage, notamment un embrayage commandé.

L'extracteur de gaz selon une variante de réalisation de l'invention peut être tel que le couplage entre le ventilateur et le moteur peut être effectué à l'aide d'un dispositif tel qu'une roue libre ou un dispositif d'embrayage.

Dans une variante de réalisation particulièrement avantageuse d'un extracteur de gaz selon l'invention, le moteur est adapté pour pouvoir freiner la rotation de l'éolienne. Ceci permet également d'optimiser la gestion de l'énergie produite par l'éolienne en permettant de continuer à profiter de l'énergie produite par l'éolienne sans inconvénient en termes d'extraction de gaz (c'est-à-dire en particulier en maintenant une extraction constante). Le moteur est par exemple adapté pour pouvoir fonctionner en génératrice de façon à permettre de ralentir le ventilateur lorsque le vent est trop important et que la vitesse de rotation de l'éolienne tend à être supérieure à la vitesse de consigne, sans interrompre le couplage entre l'éolienne et le ventilateur, c'est-à-dire sans utiliser le moteur uniquement pour entraîner en rotation le ventilateur afin d'atteindre la vitesse de consigne. Le moteur peut également être utilisé pour aider au démarrage de l'éolienne, lorsque le vent est insuffisant pour permettre la mise en mouvement de l'éolienne mais suffisant pour permettre d'entretenir une rotation de l'éolienne.

Un extracteur de gaz selon une variante de réalisation de l'invention peut comprendre un asservissement permettant de réguler l'extraction du gaz en commandant le moteur et/ou le couplage/découplage du dispositif d'accouplement. Dans une variante de réalisation particulièrement avantageuse d'un extracteur de gaz selon l'invention, l'extracteur de gaz comprend un dispositif de transmission rotative unidirectionnelle entre le moteur et le ventilateur d'extraction. Ainsi, si le tirage thermique est suffisant pour permettre au ventilateur d'extraction de maintenir une vitesse de rotation égale à la vitesse consigne, le ventilateur d'extraction n'entraîne pas le moteur et l'éolienne afin de ne pas entraver la libre rotation des pales du ventilateur d'extraction sous l'effet de la convection naturelle mettant en mouvement le gaz présent dans le conduit d'extraction, ceci peut par exemple être le cas lorsqu'un écart de température suffisamment important existe entre l'intérieur des locaux et l'air extérieur.

Le moteur peut être un moteur électrique (moteur EC, à balais...) ou autre.

Dans une variante de réalisation particulièrement avantageuse d'un extracteur de gaz selon l'invention, ledit moteur est adapté pour transmettre un couple au ventilateur d'extraction dont la valeur dépend d'un signal de commande reçu par le moteur,
et l'extracteur de gaz comprend :
- un dispositif de mesure délivrant au moins un signal, dit signal de mesure,
- une unité de commande :
   o reliée au dispositif de mesure pour recevoir au moins un signal de mesure, et
   o adaptée pour pouvoir élaborer et fournir un signal de commande au moteur et/ou au premier dispositif d'accouplement (et/ou au deuxième dispositif d'accouplement) en fonction de chaque signal de mesure reçu par l'unité de commande.

Avantageusement et selon une variante de réalisation de l'invention, l'extracteur de gaz comprend un dispositif tachymétrique délivrant un signal, dit signal de mesure de vitesse, représentatif de la vitesse réelle de rotation du ventilateur d'extraction et en ce que l'unité de commande est :
∘ reliée au dispositif tachymétrique pour recevoir ledit signal de mesure de vitesse, et
∘ adaptée pour pouvoir élaborer et fournir un signal de commande au moteur et/ou au premier dispositif d'accouplement (et/ou au deuxième dispositif d'accouplement) en fonction dudit signal de mesure de vitesse, de façon à maintenir la vitesse de rotation du ventilateur d'extraction à une vitesse de consigne prédéterminée.

Un extracteur de gaz selon une variante de réalisation de l'invention peut donc également comprendre un asservissement permettant de réguler l'extraction du gaz en fonction d'un signal de mesure tel que par exemple la vitesse de rotation du ventilateur d'extraction ou encore la pression à l'intérieur d'un conduit d'extraction relié à l'extracteur. Cette variante de réalisation permet d'optimiser la gestion de l'énergie fournie par l'éolienne en permettant d'exploiter au maximum l'énergie qui peut être fournie par l'éolienne, même dans des situations dans lesquelles une autre source d'énergie prend habituellement la place de l'éolienne au lieu de fournir uniquement le couple manquant nécessaire ou de « retirer » (en freinant par exemple) le couple supplémentaire (par exemple lorsque le vent est trop important), et ce, de manière automatisée, sans nécessité de démarrer ou d'arrêter volontairement le moteur, ni de réglage du courant d'alimentation du moteur par un opérateur. Cette variante de réalisation permet donc de réaliser d'importantes économies d'énergie et rend l'extracteur de gaz entièrement ou pratiquement autonome en énergie, sans pour autant diminuer les performances d'extraction de gaz.

En particulier, dans un extracteur de gaz selon une variante de réalisation de l'invention la vitesse de rotation du ventilateur peut non seulement être augmentée lorsque l'éolienne ne tourne pas à une vitesse suffisante par manque de vent, c'est-à-dire lorsque la vitesse de rotation de l'éolienne tend à être inférieure à la vitesse du ventilateur, mais, le ventilateur peut également être ralenti lorsque l'éolienne présente une vitesse de rotation qui tend à être supérieure à la vitesse de consigne et ce, tout en utilisant le couple fourni par l'éolienne. Avantageusement et selon une variante de réalisation de l'invention, le moteur est adapté pour pouvoir freiner la rotation de l'éolienne.

Avantageusement et selon une variante de réalisation de l'invention, le dispositif de mesure est adapté pour mesurer un paramètre représentatif d'une grandeur physique du gaz extrait. Le dispositif de mesure peut être adapté pour mesurer tout paramètre représentatif de la qualité de l'extraction de gaz obtenue au cours du fonctionnement de l'extracteur de gaz Le dispositif de mesure peut notamment être un dispositif tachymétrique mesurant la vitesse réelle de rotation du ventilateur d'extraction, il peut également s'agir d'un dispositif de mesure de la pression située dans un conduit d'évacuation de gaz relié à l'extracteur de gaz ou située dans les locaux ou encore d'un dispositif de mesure du débit de gaz dans le conduit d'évacuation de gaz ou encore d'un dispositif de mesure de l'humidité de l'air dans les locaux et/ou dans le conduit d'évacuation de gaz ou encore d'un dispositif de mesure du taux de CO₂ ou encore d'un dispositif de mesure du taux de composés organiques volatiles (COV) dans les locaux et/ou dans le conduit d'évacuation de gaz. Un extracteur de gaz selon une variante de réalisation de l'invention peut comprendre un ou plusieurs de ces dispositifs de mesure, au moins l'un d'entre eux transmettant ledit signal de mesure à l'unité de commande qui élabore et fournit un signal de commande au moteur et/ou aux dispositifs d'accouplement en fonction de chaque signal de mesure de façon à maintenir ledit paramètre à une valeur de consigne prédéterminée.

Dans une variante de réalisation particulièrement avantageuse, l'extracteur de gaz comprend un dispositif tachymétrique délivrant un signal, dit signal de mesure de vitesse, représentatif de la vitesse réelle de rotation du ventilateur d'extraction et en ce que l'unité de commande est :
∘ reliée au dispositif tachymétrique pour recevoir ledit signal de mesure de vitesse, et
∘ adaptée pour pouvoir élaborer et fournir un signal de commande au moteur et/ou au premier dispositif d'accouplement (et/ou au deuxième dispositif d'accouplement)en fonction dudit signal de mesure de vitesse, de façon à maintenir la vitesse de rotation du ventilateur d'extraction à une vitesse de consigne prédéterminée.

Dans une variante particulièrement avantageuse, un extracteur de gaz comprend :
- un ventilateur d'extraction,
- une éolienne accouplée au ventilateur d'extraction pour pouvoir l'entraîner en rotation,
caractérisé en ce qu'il comprend :
- un moteur interposé entre le ventilateur d'extraction et l'éolienne, ledit moteur étant accouplé au ventilateur d'extraction pour pouvoir l'entraîner en rotation et adapté pour transmettre un couple au ventilateur d'extraction dont la valeur dépend d'un signal de commande reçu par le moteur,
- un dispositif tachymétrique délivrant un signal, dit signal de mesure de vitesse, représentatif de la vitesse réelle de rotation du ventilateur d'extraction,
- une unité de commande :
   ∘ reliée au dispositif tachymétrique pour recevoir ledit signal de mesure de vitesse, et
   ∘ adaptée pour pouvoir élaborer et fournir un signal de commande au moteur en fonction dudit signal de mesure de vitesse, de façon à maintenir la vitesse de rotation du ventilateur d'extraction à une vitesse de consigne prédéterminée.

L'éolienne, chaque dispositif d'accouplement et le groupe moto-ventilateur peuvent être liés entre eux par un ou plusieurs arbres rotatifs. Avantageusement et selon une variante de réalisation de l'invention, l'éolienne est reliée au premier dispositif d'accouplement par un arbre, dit arbre éolien, rotatif sur lequel sont fixées des pales, dites pales d'éolienne. Avantageusement et selon une variante de réalisation de l'invention, le ventilateur d'extraction est relié au deuxième dispositif d'accouplement par un arbre, dit arbre du ventilateur, rotatif. Tout autre dispositif de transmission peut également être utilisé.

Le ventilateur d'extraction peut être de type axial ou encore de type centrifuge ou hélicocentrifuge. La géométrie et le nombre de pales du ventilateur d'extraction peut varier. Avantageusement et selon une variante de réalisation de l'invention, le ventilateur d'extraction est un ventilateur de type centrifuge. Le ventilateur d'extraction est adapté pour permettre d'extraire de façon optimale un flux d'air vicié provenant d'au moins un conduit d'évacuation de gaz du bâtiment. Le ventilateur d'extraction peut par exemple être un ventilateur de type centrifuge à pales courbées vers l'arrière, c'est-à-dire que le bord libre de chaque pale s'étend vers l'arrière, dans le sens de rotation, et radialement.

Selon l'invention, l'éolienne est une éolienne à axe vertical ou une éolienne à axe horizontal et l'arbre de l'éolienne est parallèle à l'arbre du ventilateur. Dans une variante particulièrement avantageuse d'un extracteur selon l'invention, ladite éolienne est une éolienne de type Darrieus. Dans une variante particulièrement avantageuse d'un extracteur selon l'invention, ladite éolienne comprend trois pales.

Le ventilateur est disposé au plus proche de la sortie du flux d'extraction de gaz provenant des locaux du bâtiment sur lequel l'extracteur de gaz est installé. Le ventilateur est disposé au contact d'un flux gazeux, dit flux d'extraction, provenant dudit conduit d'évacuation de gaz, circulant dans une direction globale dite direction d'extraction et un sens, dit sens d'extraction. Le dispositif d'accouplement et l'éolienne sont donc installés à côté ou, de préférence, au-dessus du ventilateur, c'est-à-dire en aval du sens d'extraction de l'extracteur, le flux d'extraction du gaz étant dirigé vers le haut (à l'intérieur du conduit d'extraction). Avantageusement, ladite éolienne est disposée en aval du ventilateur dans le sens d'extraction. Selon l'invention, l'éolienne est une éolienne à axe vertical, l'arbre du ventilateur et l'arbre de l'éolienne sont parallèles l'un à l'autre et disposés selon une même direction.

Un extracteur de gaz selon l'invention est prévu pour être installé sur la toiture d'un bâtiment, en sortie d'au moins un conduit d'évacuation de gaz. Un extracteur de gaz selon l'invention peut être disposé en sortie de tout type de conduit tel qu'un conduit circulaire en acier galvanisé ou encore un conduit maçonné. Un extracteur de gaz selon une variante de réalisation de l'invention peut également comprendre un dispositif de fixation permettant de solidariser l'extracteur par rapport à au moins un conduit d'évacuation de gaz auquel il est relié. Dans une variante de réalisation particulièrement avantageuse d'un extracteur de gaz selon l'invention, ledit extracteur de gaz comprend une embase adaptée pour pouvoir être fixée en sortie dudit conduit d'évacuation de gaz. En particulier, avantageusement et selon une variante de réalisation de l'invention, l'embase est disposée sous ledit groupe moto-ventilateur.

D'autres buts, caractéristiques et avantages de l'invention apparaîtront au vu de la description qui va suivre et des dessins annexés dans lesquels :
- la figure 1 représente une vue en perspective d'un extracteur de gaz selon l'invention,
- la figure 2 représente une vue en perspective éclatée d'un extracteur de gaz selon l'invention,
- la figure 3 représente un schéma synoptique d'un procédé de mise en œuvre d'un extracteur de gaz selon l'invention.

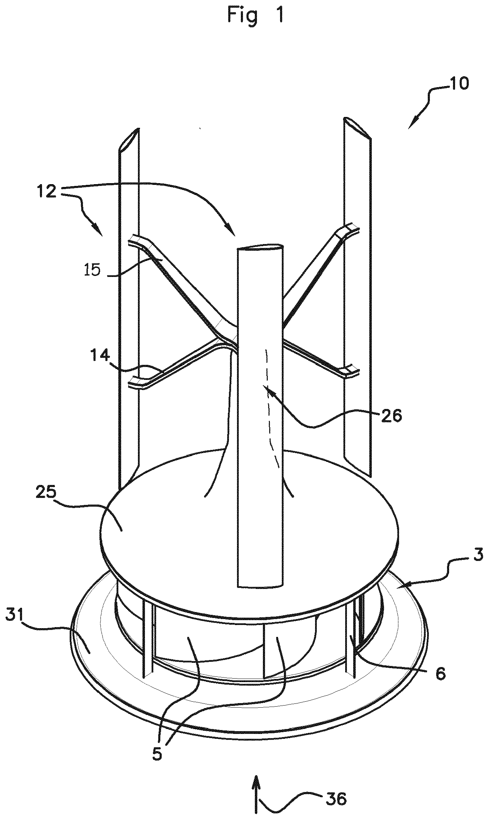

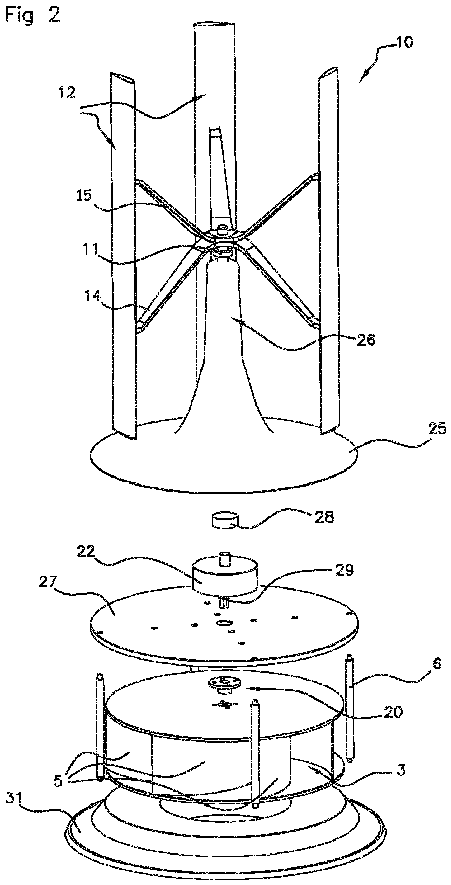

L'extracteur de gaz représenté aux figures 1 et 2 est destiné à être installé en sortie d'un conduit d'évacuation de gaz sur la toiture d'un bâtiment tel qu'un immeuble comprenant plusieurs logements et plusieurs étages.

L'extracteur de gaz comprend :
- un ventilateur d'extraction 3 comprenant un arbre, dit arbre du ventilateur (non visible sur les figures 1 et 2), entraînant en rotation des aubes 5 à une vitesse de consigne prédéterminée,
- une éolienne 10 comprenant un arbre 11, dit arbre de l'éolienne, entraîné en rotation par trois pales 12 à une vitesse, dite vitesse de rotation de l'éolienne,
- un moteur 22 entre l'arbre du ventilateur et l'arbre 11 de l'éolienne,
- un premier dispositif d'accouplement 28 interposé entre l'éolienne 10 et ledit groupe moto-ventilateur,
- et un deuxième dispositif d'accouplement 29, interposé entre le ventilateur 3 d'extraction et le moteur 22.

Le ventilateur est disposé au contact d'un flux gazeux, dit flux d'extraction, provenant du conduit d'évacuation de gaz, circulant dans une direction globale dite direction d'extraction et un sens, dit sens d'extraction 36.

L'extracteur de gaz est prévu pour être installé en toiture en sortie des conduits de ventilation, par exemple en sortie d'un conduit tubulaire en acier galvanisé ou encore d'un conduit maçonné.

L'extracteur est en particulier un extracteur dont le fonctionnement est dit « basse pression », c'est-à-dire que la pression générée par l'extracteur d'air n'excède pas 50Pa, la pression générée par l'extracteur d'air étant d'au moins 3Pa, et notamment d'au moins 7Pa. La pression générée par l'extracteur d'air peut par exemple être comprise entre 7Pa et 50Pa. Toutefois, il peut bien sûr également s'agir d'un extracteur permettant de générer une pression supérieure à 50Pa.

L'extracteur comprend une embase 31 adaptée pour pouvoir être fixée en sortie du conduit d'évacuation de gaz. Dans l'extracteur de gaz représenté aux figures 1 et 2, l'embase 31 présente par exemple une forme conique de type Venturi adaptée pour permettre de créer une dépression complémentaire au tirage thermique en sortie du conduit d'extraction. L'embase peut par exemple être formée en béton de façon à assurer une bonne fixation en sortie de conduits d'extraction maçonnés, par exemple par collage avec une résine.

Dans le mode de réalisation préférentiel représenté en figure 1, le ventilateur 3 est un ventilateur de type centrifuge à pales 5. Un tel ventilateur a pour avantage d'être adapté à une ventilation basse pression en présentant une efficacité optimale avec une faible vitesse de rotation des pales. Chaque pale 5 est fixée à l'arbre du ventilateur d'extraction par un bord de fixation s'étendant parallèlement à l'axe de l'arbre du ventilateur d'extraction. Le bord opposé, dit bord libre, de chaque pale 5 s'étend vers l'arrière, dans le sens de rotation et radialement.

Le ventilateur 3 est surmonté d'un plateau 27 fixé à l'embase 31 par des entretoises verticales 6.

Le premier dispositif d'accouplement 28 est disposé au-dessus du plateau 27, le dispositif d'accouplement 28 étant lié à l'arbre du ventilateur 3 à travers le centre du plateau 27.

Le moteur 22 est un moteur à basse consommation tel qu'un moteur sans balais. Une coque de protection 26 du moteur et du dispositif d'accouplement peut être prévue entre l'éolienne 10 et le plateau 27. La coque de protection 26 présente par exemple une forme conique dont le sommet, disposé du côté de l'éolienne 10, est ouvert de façon à ménager un passage pour l'arbre 11 de l'éolienne. L'arbre 11 de l'éolienne est fixé au sommet de la coque de protection 26 sans que la coque de protection 26 ne soit liée en rotation à l'arbre 11 de l'éolienne. Un roulement à billes logé au sommet et à l'intérieur de la coque de protection 26 peut par exemple être utilisé pour maintenir l'arbre 11 de l'éolienne. La portion conique de la coque de protection 26 se prolonge autour du moteur par une portion sous la forme d'une flasque 25. La coque de protection 26 peut par exemple être formée d'un matériau métallique ou d'un matériau plastique. Le moteur 22 est fixé à l'arbre du ventilateur par une douille 20, le deuxième dispositif d'accouplement 29 étant disposé entre le moteur et la douille 20.

Dans le mode de réalisation préférentiel représenté en figure 1, l'éolienne 10 est une éolienne de type Darrieus à axe vertical comprenant trois pales 12, le profil des pales étant de type NACA0018®, EC4040® ou encore EC6040®. Une telle éolienne a pour avantage de pouvoir démarrer seule pour une large plage de vent, notamment lorsque la vitesse de vent est comprise entre 4m/s et 12m/s. L'éolienne de type Darrieus peut également être complétée d'une éolienne de type Savonius en son centre (variante non représentée), facilitant ainsi la mise en rotation de l'éolienne de type Darrieus, en particulier avec un minimum de vent.

Deux pièces 14 et 15 en forme d'étoile à trois branches, avec un angle de 120° entre chaque branche, supportent les pales 12 de l'éolienne et sont fixées en leur centre à l'arbre 11 de l'éolienne 10. La première pièce 14 et la deuxième pièce 15 en forme d'étoile sont fixées au sommet de l'arbre de l'éolienne. Chacune des pales 12 de l'éolienne 10 s'étend entre une extrémité d'une branche de la pièce 15 en forme d'étoile et une autre extrémité d'une branche de la pièce 14 en forme d'étoile disposée en-dessous de celle-ci de façon à ce que les pales 12 de l'éolienne soient disposées verticalement. Chacune des pales 12 de l'éolienne 10 se prolonge verticalement vers la flasque 25 (sans entrer en contact avec celle-ci). L'éolienne 10 comprend donc les pales 12, les pièces 14 et 15 en forme d'étoile à trois branches et l'arbre 11 de l'éolienne.

L'extracteur de gaz comprend également une unité de commande du moteur et/ou du dispositif d'accouplement adaptée pour générer et transmettre au moteur et/ou au dispositif d'accouplement au moins une commande de régulation de la transmission entre l'arbre 11 de l'éolienne 10 et l'arbre du ventilateur 3. L'unité de commande comprend au moins une mémoire adaptée pour mémoriser la valeur de la vitesse de consigne de rotation du ventilateur. La régulation de la vitesse de rotation du ventilateur peut également être programmée en fonction de données issues de mesures effectuées par des capteurs de débit du flux d'extraction, des capteurs de pression dans le conduit d'extraction, ou encore de données représentatives de la qualité de l'air intérieur telles que des données mesurées par des capteurs d'humidité relative, des capteurs de taux de CO₂ ou encore des capteurs de taux de composés organiques volatiles (COV).

La vitesse de consigne est par exemple comprise entre 300tr/min et 600tr/min, la vitesse de consigne est par exemple de 400 tr/min.

Si nécessaire, le moteur peut être mis en marche afin d'assister le démarrage de l'éolienne, c'est-à-dire sa mise en rotation si le vent n'est pas suffisant pour permettre sa mise en mouvement mais qu'il est suffisant pour entretenir la rotation des pales de l'éolienne.

Le couplage entre le moteur et l'éolienne peut être réalisé à l'aide d'une roue libre ou d'un d'embrayage. Cela permet d'éviter que l'éolienne soit entraînée par le moteur s'il n'y a pas de vent par exemple. Ainsi, il n'y a pas de pertes par frottement des pales sur l'air et donc pas d'impact négatif sur la puissance nécessaire devant être fournie par le moteur.

D'autre part, le couplage entre le ventilateur et le moteur peut être effectué à l'aide d'une roue libre ou d'un d'embrayage. Cela permet également de limiter les pertes par frottement dans le cas où les pertes par frottement du dispositif de roue libre ou d'embrayage sont moins importantes que les pertes générées par une liaison avec le moteur.

L'extracteur représenté en figure 1 comprend un moteur et est tel que le couplage entre le moteur et l'éolienne est réalisé à l'aide d'une première roue libre 28 et le couplage entre le ventilateur et le moteur est réalisé à l'aide d'une deuxième roue libre 29. Ainsi, s'il n'y a pas assez de vent, l'unité de commande transmet un signal de mise en marche du moteur, le sens de rotation de l'arbre moteur étant le sens dans lequel l'éolienne est en roue libre par rapport au moteur, de façon à ce que l'éolienne ne soit pas entraînée en rotation lorsque le moteur tourne à une vitesse supérieure à la vitesse de rotation de l'éolienne. À l'inverse, lorsque le moteur est à l'arrêt, par exemple parce qu'il y a suffisamment de vent, l'arbre de l'éolienne transmet son mouvement de rotation à l'arbre du ventilateur. Dans ce cas, la roue libre 28 permet donc la transmission d'un couple d'entrainement mécanique de l'éolienne vers le moteur et empêche la transmission d'un couple d'entrainement mécanique du moteur vers l'éolienne. D'autre part, lorsque le vent n'est pas suffisant pour permettre d'atteindre la vitesse consigne uniquement grâce à l'éolienne, le moteur fournit le complément d'énergie nécessaire pour atteindre ladite vitesse de consigne.

Lorsque le vent est tel qu'il permet que la vitesse de rotation de l'éolienne soit égale à la vitesse de consigne, le moteur et le dispositif d'accouplement permettent une transmission directe entre l'arbre de rotation de l'éolienne et l'arbre de rotation du ventilateur.

Lorsque le vent est important et que la vitesse de rotation de l'éolienne 10 est supérieure à la vitesse de consigne (mais inférieure à une vitesse de rotation, dite vitesse limite, au-delà de laquelle il serait dangereux de maintenir l'éolienne couplée au ventilateur), l'unité de commande est adaptée pour pouvoir réguler la vitesse de rotation du ventilateur autour de ladite vitesse de consigne, sans interruption du couplage entre l'arbre de l'éolienne et l'arbre du ventilateur.

Bien sûr, l'unité de commande de l'extracteur de gaz peut également prévoir que lorsque le vent est beaucoup trop important, c'est-à-dire qu'il est susceptible d'entraîner une détérioration d'un des composants de l'extracteur de gaz, la transmission entre l'éolienne et le ventilateur est interrompue ou l'éolienne est arrêtée par exemple à l'aide d'un frein. Dans ce cas particulier et exceptionnel, le moteur peut alors prendre le relais et entraîner en rotation les pales du ventilateur de façon à atteindre la vitesse de rotation consigne du ventilateur.

Le deuxième dispositif d'accouplement 29, interposé entre le ventilateur 3 d'extraction et le moteur 22, permet au ventilateur 3 d'extraction de présenter une vitesse de rotation supérieure à la vitesse de rotation du moteur 22, notamment dans le cas où le tirage thermique le permet, ce qui améliore l'efficacité du dispositif tout en minimisant la consommation d'énergie fournie par le moteur. La présence du deuxième dispositif d'accouplement 29 permet également de profiter de l'inertie du moteur sans subir l'inertie de l'éolienne.

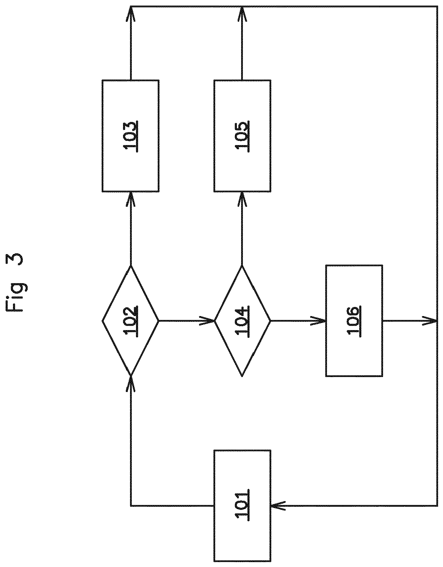

La figure 3 représente un schéma synoptique simplifié d'un mode de réalisation d'un procédé de mise en œuvre d'un extracteur de gaz tel que décrit ci-dessus.

À l'étape 101, le dispositif tachymétrique mesure la vitesse réelle de rotation du ventilateur d'extraction et transmet ce signal de mesure de vitesse à l'unité de commande. À l'étape 102, l'unité de commande compare la valeur du signal de mesure de vitesse mesuré par le dispositif tachymétrique à la vitesse consigne, si la vitesse mesurée par le dispositif tachymétrique est inférieure à la vitesse consigne, l'unité de commande passe à l'étape 103, sinon l'unité de commande passe à l'étape 104.

À l'étape 103, l'unité de commande élabore et fournit un signal de commande au moteur consistant en une augmentation du couple transmis au ventilateur d'extraction (le couple pouvant être positif ou négatif, l'augmentation étant relative). Par exemple, si un couple non nul est fourni par le moteur au ventilateur (par exemple dans une situation où il y a peu de vent et où le fonctionnement de l'extracteur est assisté par le moteur), alors cette augmentation se traduira par un couple positif, qui pourra par exemple passer de 1Nm à 2Nm. Si l'éolienne était déjà en train d'être freinée par le moteur et que le vent a ralenti, il faut diminuer le freinage, on peut alors par exemple passer de -2Nm à -1Nm. Dans ces deux cas, la valeur absolue du couple a été augmentée.

À l'étape 104, l'unité de commande compare la valeur du signal de mesure de vitesse à la vitesse consigne, et, si la valeur du signal de mesure de vitesse est égale à la vitesse consigne, l'unité de commande passe à l'étape 105. Dans la négative, l'unité de commande passe à l'étape 106.

À l'étape 105, comme il n'est pas nécessaire d'augmenter la vitesse de rotation ou de freiner le ventilateur d'extraction, aucun signal de commande n'est transmis au moteur.

À l'étape 106, l'unité de commande élabore et fournit un signal de commande au moteur consistant en une diminution du couple transmis au ventilateur d'extraction (le couple pouvant être positif ou négatif, la diminution étant relative). Cela revient par exemple à diminuer la valeur du couple à transmettre par le moteur de 2Nm à 1Nm, ou à augmenter le freinage de -1Nm à -2Nm.

L'étape 101 correspond à une surveillance périodique de la valeur du signal de mesure de vitesse mesurée par le dispositif tachymétrique au cours de laquelle l'unité de commande acquiert des signaux de mesure de vitesse avec une fréquence d'acquisition prédéterminée. Il peut également être prévu que l'étape 101 n'est déclenchée que lorsque l'unité de commande détecte que la valeur de mesure de vitesse mesurée par le dispositif tachymétrique est différente de la vitesse consigne.

Dans une autre variante de réalisation particulièrement avantageuse d'un extracteur selon l'invention, le couplage entre l'arbre du ventilateur et l'éolienne peut être réalisé par un embrayage. Un extracteur muni d'un tel embrayage présente l'avantage d'éviter des pertes par frottement comme dans un dispositif à roue libre.

En outre, un extracteur de gaz selon l'invention peut également comprendre un dispositif de protection extérieur, protégeant au moins l'éolienne ou l'ensemble de l'extracteur de gaz contre les volatiles et de façon à empêcher notamment qu'un opérateur ne puisse se blesser accidentellement en approchant par exemple une main des pales de l'éolienne ou du ventilateur en rotation. Il peut par exemple s'agir d'un tube grillagé (non représenté) et ne perturbant pas le fonctionnement normal de l'éolienne, ni l'évacuation des gaz viciés. En supprimant ou non l'embase de l'extracteur de gaz, il peut également éventuellement être prévu que l'éolienne et/ou le moteur et/ou le dispositif d'accouplement et/ou le ventilateur d'extraction soient supportés par le dispositif de protection extérieur et fixés à celui-ci, le dispositif de protection extérieur étant fixé à la conduite d'évacuation de gaz et/ou reposant fixement sur la toiture du bâtiment.

Bien entendu, cette description est donnée à titre d'exemple illustratif uniquement et l'homme du métier pourra y apporter de nombreuses modifications sans sortir de la portée de l'invention, comme par exemple prévoir un deuxième moteur permettant d'enclencher la mise en mouvement de l'éolienne. Par ailleurs, l'éolienne de type Darrieus peut par exemple être complétée d'une éolienne de type Savonius en son centre, facilitant ainsi la mise en rotation de l'éolienne de type Darrieus. La portée de l'invention est uniquement définie par les revendications jointes en annexe.

## Revendications

1. Extracteur (1) de gaz comprenant :
- un groupe, dit groupe moto-ventilateur, comprenant :
∘ un ventilateur (3) d'extraction comprenant un arbre rotatif, dit arbre du ventilateur, et un nombre de pales (5),
∘ un moteur (22) accouplé au ventilateur d'extraction pour pouvoir l'entraîner en rotation,
- une éolienne (10) accouplée au groupe moto-ventilateur pour pouvoir l'entraîner en rotation, l'éolienne (10) comprenant un arbre rotatif, dit arbre de l'éolienne (11),
dans lequel:
- l'arbre du ventilateur et l'arbre de l'éolienne (11) sont parallèles l'un à l'autre et disposés selon une même direction, l'éolienne (11) étant une éolienne à axe vertical,
- un premier dispositif d'accouplement (28), interposé entre ladite éolienne (10) et ledit moteur (22), ledit moteur (22) étant disposé entre le ventilateur (3) d'extraction et l'éolienne (10),
- ledit premier dispositif d'accouplement étant adapté pour présenter :
∘ un premier état, dit état de couplage, dans lequel l'éolienne (10) est accouplée au groupe moto-ventilateur pour pouvoir l'entraîner en rotation,
∘ un deuxième état, dit état de découplage, dans lequel ledit groupe moto-ventilateur n'entraîne pas l'éolienne (10) en rotation,
**caractérisé en ce que** :
- l'extracteur de gaz comprend en outre un deuxième dispositif d'accouplement (29), interposé entre le ventilateur (3) d'extraction et le moteur (22), de façon à permettre une vitesse de rotation du ventilateur (3) d'extraction supérieure à celle du moteur (22), le moteur et l'éolienne n'entravant alors pas la libre rotation des pales du ventilateur d'extraction.

2. Extracteur de gaz selon la revendication 1, **caractérisé en ce que** ledit premier dispositif d'accouplement est un dispositif de transmission rotative unidirectionnelle.

3. Extracteur de gaz selon la revendication 1, **caractérisé en ce que** ledit premier dispositif d'accouplement est un embrayage, en particulier un embrayage commandé.

4. Extracteur de gaz selon l'une des revendications 1 à 3, **caractérisé en ce que** le moteur est adapté pour pouvoir freiner la rotation de l'éolienne.

5. Extracteur de gaz selon l'une des revendications 1 à 4, **caractérisé en ce que** :
- ledit moteur (22) est adapté pour transmettre un couple au ventilateur (3) d'extraction dont la valeur dépend d'un signal de commande reçu par le moteur,
et **en ce que** l'extracteur de gaz comprend :
- un dispositif de mesure délivrant au moins un signal, dit signal de mesure,
- une unité de commande :
∘ reliée au dispositif de mesure pour recevoir au moins un signal de mesure, et
∘ adaptée pour pouvoir élaborer et fournir un signal de commande au moteur et/ou au premier dispositif d'accouplement en fonction de chaque signal de mesure reçu par l'unité de commande.

6. Extracteur de gaz selon la revendication 5, **caractérisé en ce qu'**il comprend un dispositif tachymétrique délivrant un signal, dit signal de mesure de vitesse, représentatif de la vitesse réelle de rotation du ventilateur (3) d'extraction et **en ce que** l'unité de commande est :
∘ reliée au dispositif tachymétrique pour recevoir ledit signal de mesure de vitesse, et
∘ adaptée pour pouvoir élaborer et fournir un signal de commande au moteur et/ou au premier dispositif d'accouplement en fonction dudit signal de mesure de vitesse, de façon à maintenir la vitesse de rotation du ventilateur d'extraction à une vitesse de consigne prédéterminée.

7. Extracteur de gaz selon l'une des revendications 1 à 6, **caractérisé en ce que** l'éolienne (10) est reliée au premier dispositif d'accouplement par ledit arbre éolien sur lequel sont fixées des pales, dites pales d'éolienne.

8. Extracteur de gaz selon l'une des revendications 1 à 7, **caractérisé en ce que** le ventilateur (3) d'extraction est relié au deuxième dispositif d'accouplement par ledit arbre du ventilateur.

9. Extracteur de gaz selon l'une des revendications 1 à 8, **caractérisé en ce que** ladite éolienne est une éolienne de type Darrieus.

10. Extracteur de gaz selon l'une des revendications 1 à 9, **caractérisé en ce qu'**il comprend une embase (31) adaptée pour pouvoir être fixée en sortie d'un conduit d'évacuation de gaz.

11. Extracteur de gaz selon l'une des revendications 1 à 10, **caractérisé en ce que** le deuxième dispositif d'accouplement est adapté pour présenter :
∘ un premier état, dit état de couplage, dans lequel le moteur est accouplé au ventilateur d'extraction pour pouvoir l'entraîner en rotation,
∘ un deuxième état, dit état de découplage, dans lequel ledit moteur n'entraîne pas le ventilateur d'extraction en rotation.

12. Extracteur de gaz selon l'une des revendications 1 à 11, **caractérisé en ce que** le deuxième dispositif d'accouplement est un dispositif de transmission rotative unidirectionnelle.

## Patentansprüche

1. Gasextraktor (1), Folgendes umfassend:
eine Motor-Ventilator-Gruppe genannte Gruppe, Folgendes umfassend:
∘ einen Extraktionsventilator (3), der eine Ventilatorwelle genannte drehende Welle und eine Anzahl an Schaufeln (5) umfasst,
∘ einen Motor (22), der an den Extraktionsventilator gekoppelt ist, um ihn in Drehung antreiben zu können,
- eine Windkraftanlage (10), die an die Motor-Ventilator-Gruppe gekoppelt ist, um sie in Drehung antreiben zu können, wobei die Windkraftanlage (10) eine Welle der Windkraftanlage (11) genannte drehende Welle umfasst, wobei:
- die Welle des Ventilators und die Welle der Windkraftanlage (11) zueinander parallel sind und in einer selben Richtung angeordnet sind, wobei die Windkraftanlage (11) eine Windkraftanlage mit vertikaler Achse ist,
- eine erste Kopplungsvorrichtung (28), die zwischen der Windkraftanlage (10) und dem Motor (22) eingesetzt ist, wobei der Motor (22) zwischen dem Extraktionsventilator (3) und der Windkraftanlage (10) angeordnet ist,
- wobei die erste Kopplungsvorrichtung angepasst ist, um Folgendes aufzuweisen:
∘ einen ersten, Kopplungszustand genannten Zustand, in dem die Windkraftanlage (10) an die Motor-Ventilator-Gruppe gekoppelt ist, um sie in Drehung antreiben zu können,
∘ einen zweiten, Entkopplungszustand genannten Zustand, in dem die Motor-Ventilator-Gruppe die Windkraftanlage (10) nicht in Drehung antreibt,
**dadurch gekennzeichnet, dass**:
- der Gasextraktor weiter eine zweite Kopplungsvorrichtung (29) umfasst, die zwischen dem Extraktionsventilator (3) und dem Motor (22) eingesetzt ist, um eine Drehgeschwindigkeit des Extraktionsventilators (3) höher als jene des Motors (22) zu erlauben, wobei der Motor und die Windkraftanlage somit die freie Drehung der Schaufeln des Extraktionsventilators nicht behindern.

2. Gasextraktor nach Anspruch 1, **dadurch gekennzeichnet, dass** die erste Kopplungsvorrichtung eine unidirektionale Übertragungsvorrichtung ist.

3. Gasextraktor nach Anspruch 1, **dadurch gekennzeichnet, dass** die erste Kopplungsvorrichtung eine Kupplung, im Speziellen eine gesteuerte Kupplung ist.

4. Gasextraktor nach einem der Ansprüche 1 bis 3, **dadurch gekennzeichnet, dass** der Motor angepasst ist, um die Drehung der Windkraftanlage bremsen zu können.

5. Gasextraktor nach einem der Ansprüche 1 bis 4, **dadurch gekennzeichnet, dass**:
- der Motor (22) angepasst ist, um ein Moment an den Extraktionsventilator (3) zu übertragen, dessen Wert von einem Steuersignal abhängig ist, das vom Motor empfangen wird,
und dadurch, dass der Gasextraktor Folgendes umfasst:
- eine Messvorrichtung, die mindestens ein Messsignal genanntes Signal abgibt,
- eine Steuereinheit:
∘ die mit der Messvorrichtung verbunden ist, um mindestens ein Messsignal zu empfangen,
∘ die angepasst ist, um ein Steuersignal auszuarbeiten und dem Motor und/oder der ersten Kopplungsvorrichtung in Abhängigkeit von jedem Messsignal bereitzustellen, das von der Steuereinheit empfangen wird.

6. Gasextraktor nach Anspruch 5, **dadurch gekennzeichnet, dass** er eine Geschwindigkeitsmessvorrichtung umfasst, die ein Geschwindigkeitsmesssignal genanntes Signal abgibt, das repräsentativ für die tatsächliche Drehgeschwindigkeit des Extraktionsventilators (3) ist, und dadurch, dass die Steuereinheit Folgendes ist:
∘ mit der Geschwindigkeitsmessvorrichtung verbunden, um das Geschwindigkeitsmesssignal zu empfangen,
∘ angepasst, um ein Steuersignal auszuarbeiten und dem Motor und/oder der ersten Kopplungsvorrichtung in Abhängigkeit von dem Geschwindigkeitsmesssignal bereitzustellen, um die Drehgeschwindigkeit des Extraktionsventilators auf einer vorbestimmten Sollgeschwindigkeit beizubehalten.

7. Gasextraktor nach einem der Ansprüche 1 bis 6, **dadurch gekennzeichnet, dass** die Windkraftanlage (10) durch die Windkraftanlagenwelle, an der die Windkraftanlagenschaufeln genannten Schaufeln befestigt sind, mit der ersten Kopplungsvorrichtung verbunden ist.

8. Gasextraktor nach einem der Ansprüche 1 bis 7, **dadurch gekennzeichnet, dass** der Extraktionsventilator (3) durch die Welle des Ventilators mit der zweiten Kopplungsvorrichtung verbunden ist.

9. Gasextraktor nach einem der Ansprüche 1 bis 8, **dadurch gekennzeichnet, dass** die Windkraftanlage eine Windkraftanlage des Typs Darrieus ist.

10. Gasextraktor nach einem der Ansprüche 1 bis 9, **dadurch gekennzeichnet, dass** er eine Grundplatte (31) umfasst, die angepasst ist, um am Ausgang einer Gasausbringungsleitung befestigt werden zu können.

11. Gasextraktor nach einem der Ansprüche 1 bis 10, **dadurch gekennzeichnet, dass** die zweite Kopplungsvorrichtung angepasst ist, um Folgendes aufzuweisen:
∘ einen ersten, Kopplungszustand genannten Zustand, in dem der Motor an den Extraktionsventilator gekoppelt ist, um ihn in Drehung antreiben zu können,
∘ einen zweiten, Entkopplungszustand genannten Zustand, in dem der Motor den Extraktionsventilator nicht in Drehung antreibt.

12. Gasextraktor nach einem der Ansprüche 1 bis 11, **dadurch gekennzeichnet, dass** die zweite Kopplungsvorrichtung eine unidirektionale Drehübertragungsvorrichtung ist.

## Claims

1. Gas extractor (1) comprising:
- an assembly, referred to as a fan-motor assembly, comprising:
∘ an extraction fan (3) comprising a rotary shaft, referred to as fan shaft, and a number of blades (5),
∘ a motor (22) coupled with the extraction fan to be able to rotate same,
- a wind turbine (10) coupled with the fan-motor assembly to be able to rotate same, the wind turbine (10) comprising a rotary shaft, referred to as wind turbine shaft (11), wherein:
- the fan shaft and the wind turbine shaft (11) are parallel with one another and disposed along the same direction, the wind turbine (11) being a vertical-axis wind turbine,
- a first coupling device (28), inserted between said wind turbine (10) and said motor (22), said motor (22) being disposed between the extraction fan (3) and the wind turbine (10),
- said first coupling device being suitable for having:
∘ a first status, referred to as coupling status, wherein the wind turbine (10) is coupled with the fan-motor assembly to be able to rotate same,
∘ a second status, referred to as uncoupling status, wherein said fan-motor assembly does not rotate the wind turbine (10),
**characterised in that**:
- the gas extractor further comprises a second coupling device (29), inserted between the extraction fan (3) and the motor (22), so as to enable a greater rotational speed of the extraction fan (3) than that of the motor (22), the motor and the wind turbine then not impeding the free rotation of the blades of the extraction fan.

2. Gas extractor according to claim 1, **characterised in that** said first coupling device is a unidirectional rotary transmission device.

3. Gas extractor according to claim 1, **characterised in that** said first coupling device is a clutch, in particular a controlled clutch.

4. Gas extractor according to one of claims 1 to 3, **characterised in that** the motor is suitable for being able to brake the rotation of the wind turbine.

5. Gas extractor according to one of claims 1 to 4, **characterised in that**:
- said motor (22) is suitable for transmitting a torque to the extraction fan (3), the value whereof depends on a control signal received by the motor,
and **in that** the gas extractor comprises:
- a measuring device outputting at least one signal, referred to as measurement signal,
- a control unit:
∘ connected to the measuring device to receive at least one measurement signal, and
∘ suitable for being able to produce and supply a control signal to the motor and/or to the first coupling device according to each measurement signal received by the control unit.

6. Gas extractor according to claim 5, **characterised in that** it comprises a tachymetric device outputting a signal, referred to as speed measurement signal, representing the actual rotational speed of the extraction fan (3) and **in that** the control unit is:
∘ connected to the tachymetric device to receive said speed measurement signal, and
∘ suitable for being able to produce and supply a control signal to the motor and/or to the first coupling device according to said speed measurement signal, so as to keep the rotational speed of the extraction fan at a predetermined setpoint speed.

7. Gas extractor according to one of claims 1 to 6, **characterised in that** the wind turbine (10) is connected to the first coupling device by said wind turbine shaft whereon blades, referred to as wind turbine blades, are attached.

8. Gas extractor according to one of claims 1 to 7, **characterised in that** the extraction fan (3) is connected to the second coupling device by said fan shaft.

9. Gas extractor according to one of claims 1 to 8, **characterised in that** said wind turbine is a Darrieus type wind turbine.

10. Gas extractor according to one of claims 1 to 9, **characterised in that** it comprises a base (31) suitable for being able to be attached at the outlet of a gas discharge conduit.

11. Gas extractor according to one of claims 1 to 10, **characterised in that** the second coupling device is suitable for having:
∘ a first status, referred to as coupling status, wherein the motor is coupled with the extraction fan to be able to rotate same,
∘ a second status, referred to as uncoupling status, wherein said motor does not rotate the extraction fan.

12. Gas extractor according to one of claims 1 to 11, **characterised in that** the second coupling device is a unidirectional rotary transmission device.
